# EUROPÄISCHE PATENTSCHRIFT

(11) **EP 2 196 337 B1**
(45) Veröffentlichungstag und Bekanntmachung des Hinweises auf die Patenterteilung: **02.05.2012**
(21) Anmeldenummer: 08171551.8
(22) Anmeldetag: 12.12.2008
(51) Int. Cl.: B60G 15/12, F16F 9/096, F16F 9/42

(54) **Dämpfungseinrichtung für Fahrzeuge**
Dampening device for vehicles
Dispositif d'amortissement pour véhicules

(43) Veröffentlichungstag der Anmeldung: 16.06.2010
(73) Patentinhaber: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- EP-A- 0 472 920
- EP-A- 1 584 502
- EP-B- 0 425 885
- EP-B- 1 125 069
- JP-A- 2005 155 793
- JP-A- 2005 188 601
- NL-A- 7 416 405
- US-A- 4 061 320
- US-A- 4 936 424

## Beschreibung

Die vorliegende Erfindung betrifft eine Dämpfungseinrichtung für Fahrzeuge nach dem Oberbegriff des Anspruchs 1.

Dämpfungseinrichtungen sind hinlänglich aus zahlreichen Veröffentlichungen bekannt. In aller Regel ist in einem Fahrzeug für jedes Rad eine Dämpfereinheit vorhanden.

Eine dem Oberbegriff des Anspruchs 1 entsprechende Dämpfungseinrichtung ist in dem Dokument JP 2005 188 601 A beschrieben. Es handelt sich um einen hydraulischen Stoßdämpfer mit einem Teleskopzylinder, wobei ein Dämpferkolben Strömungspassagen mit Dämpfungsventilen aufweist. Dieser bekannte Stoßdämpfer ist als so genannter "Zweirohrdämpfer" ausgebildet, wobei ein Hydraulikspeicher den Teleskopzylinder koaxial umschließt. Der somit im Querschnitt ringförmige Speicherraum ist über eine im unteren Bereich angeordnete Passage mit dem unteren Zylinderraum verbunden. Innerhalb des Speicherraums ist als Kühlelement eine ringförmige Zwischenwandung so angeordnet, dass Wärme von innen nach außen über ein äußeres, rohrförmiges Gehäuse an die Umgebung abgegeben wird. Innerhalb des Speicherraums wird das jeweils variable Volumen des hydraulischen Dämpfungsmediums unmittelbar mit einem in einem oberen Freiraum befindlichen Gas beaufschlagt. Dadurch kann der Stoßdämpfer nicht in einer beliebigen Raumorientierung montiert und betrieben werden.

Eine sehr ähnliche Ausführung ist durch das Dokument JP 2005 155 793 A bekannt, wobei aber innerhalb des den Teleskopzylinder umschließenden Hydraulikspeichers oberhalb des jeweiligen Volumens des Dämpfungsmediums ein nach außen belüfteter Freiraum gebildet ist, in dem somit Luft mit Atmosphärendruck angeordnet ist.

Das Dokument EP 0 425 858 B1 beschreibt ein hydropneumatisches Federungssystem, wobei eine Kolbenzylindereinheit als Federbein zwischen einer gefederten Masse (Fahrzeugrahmen) und einer ungefederten Masse (Fahrzeugrad) angeordnet ist. Das Federbein ist hydraulisch mit einem hydropneumatischen Federspeicher verbunden, so dass beim Einfedern ein bestimmtes Volumen eines Hydraulikmediums gegen ein kompressibes Federmedium (Druckgas) im Federspeicher verdrängt wird. Das Druckgas wird dadurch komprimiert, und der Gasdruck bewirkt als pneumatische Feder über das dem Federmedium zugeordnete Hydraulikmedium eine Tragkraft im Federbein. Dieses bekannte Federungssystem hat sich in der Praxis recht gut bewährt, und zwar insbesondere in Ausführungen, wobei das Federbein mit zwei Federspeichern so zusammenwirkt, dass ein Kolben des Federbeins beidseitig mit je einem Federdruck beaufschlagt wird. Die Tragkraft resultiert folglich aus der Differenz von zwei gegensinnig auf den Kolben wirkenden Kräften.

Allerdings wird dabei zum Dämpfen der Federungsbewegungen das gegen das pneumatische Druckmedium wirkende Hydraulikmedium über ein Dämpfungsventil geführt. Durch die Dämpfung (Drosselung) wird das dem Federmedium zugeordnete Hydraulikmedium aber rasch und zum Teil stark erwärmt. Diese Erwärmung wirkt sich auch auf das Druckgas aus, so dass dessen Druck und damit auch die Tragfederkraft ansteigen. Daraus resultieren je nach Fahrsituation recht ungünstige, variierende Federungs- und Dämpfungseigenschaften.

Die WO 03/106202 A1 beschreibt eine Federungseinrichtung, wobei in einigen Ausführungen eine Dämpfungseinrichtung einen separaten, von dem eigentlichen Federzylinder und dem Federmedium unabhängigen Kreislauf eines hydraulischen Dämpfungsmediums aufweist. Dazu ist mindestens ein separater Dämpfungszylinder mit einem in einem Zylinder relativbeweglich geführten Dämpferkolben sowie mindestens ein hydraulisch mit dem Dämpferzylinder verbundenes Dämpfungsventil erforderlich. Der Kolben des Federzylinders wird über eine von einem Zahnradgetriebe gebildete Antriebseinrichtung angetrieben, die die Schwenkbewegungen eines Rad-Schwingentragarms in lineare Relativbewegungen zwischen Zylinder und Kolben des Federzylinders umsetzt. Dabei soll die Dämpfungseinrichtung mit der gleichen Antriebseinrichtung wie auch der Federzylinder zusammenwirken, wobei aber die Medien, d.h. Federmedium und Dämpfungsmedium, vollständig voneinander getrennt sind. Hintergrund ist, dass dadurch nahezu keine thermische Abhängigkeit besteht, so dass dämpfungsbedingte Erwärmungen des Dämpfungsmediums insoweit unkritisch sind, als davon die Temperatur des Federmediums und somit auch der Druck und die druckabhängige Tragfederkraft praktisch unbeeinflusst bleiben. Diese bekannte Federungs- und Dämpfungseinrichtung hat allerdings einen relativ aufwändigen Aufbau, was sich auch durch ein relativ großes Einbauvolumen und Gewicht bemerkbar macht.

Das Dokument EP 1 584 502 A1 beschreibt eine weitere Federungs- und Dämpfungseinrichtung mit einem recht einfachen Teleskop-Federzylinder, dessen in einem Zylinder beweglich geführter Kolben zur Erzeugung einer lasttragenden Tragfederkraft unmittelbar oder über ein Hydraulikmedium mittelbar gegen ein elastisch kompressibles Federmedium wirkt. Hierbei ist zum Dämpfen ebenfalls ein separater, von dem Federmedium unabhängiger Kreislauf eines hydraulischen Dämpfungsmediums vorgesehen. Dazu trennt der Kolben innerhalb des Zylinders zwei Arbeitsräume voneinander, wobei der erste Arbeitsraum dem Federmedium und der zweite Arbeitsraum dem Dämpfungsmedium zugeordnet sind. Der mit dem Dämpfungsmedium gefüllte zweite Arbeitsraum ist über eine Dämpfungsventilanordnung mit einem Hydraulikbehälter (Hydraulikspeicher) verbunden. Dieser Hydraulikbehälter wird so angeordnet, dass das Dämpfungsmedium schwerkraftbedingt sich in einem unteren Bereich befindet. Oberhalb des Dämpfungsmediums kann Luft mit Atmosphärendruck angeordnet sein. Es kann aber auch vorgesehen sein, diesen Raum oberhalb des Dämpfungsmediums unter einen bestimmten Vorspanndruck zu setzen, um beim Einfedern den Fluss in den zweiten Arbeitsraum hinein zu unterstützen (Beschleunigung der Rückströmung). Dieses bekannte System hat sich gut bewährt, weil es bei konstruktiv einfacher und kompakter Bauweise eine sehr weitreichende thermische Entkoppelung zwischen dem hydraulischen Dämpfungsmedium und dem Federmedium gewährleistet. Da allerdings die beiden Medien nur über den Kolben des Federzylinders voneinander getrennt sind, kann es vor allem bei sehr starker Erwärmung des Dämpfungsmediums doch zu einem geringfügigen Wärmeübergang zum Federmedium kommen.

Der vorliegenden Erfindung liegt deshalb die Aufgabe zu Grunde, eine Dämpfungseinrichtung der eingangs beschriebenen Art zu schaffen, mit der bei weiterhin einfacher und kompakter Bauweise der Komponenten eine weitere Verbesserung der Gebrauchseigenschaften erreicht werden kann.

Erfindungsgemäß wird dies durch die Merkmale des unabhängigen Anspruchs 1 erreicht. Weitere vorteilhafte Ausgestaltungen der Erfindung sind in den abhängigen Ansprüchen sowie in der folgenden Beschreibung enthalten.

Durch die erfindungsgemäße Ausgestaltung wird ein hoher Anteil der durch Drosselung entstehenden Wärme aus dem Dämpfungsmedium über das Kühlelement aus dem Hydraulikspeicher nach außen an die Umgebung abgeführt. Durch diese Kühlung des Dämpfungsmediums wird auch eine Wärmeübertragung auf ein Federmedium reduziert, wenn die Dämpfungseinrichtung in Kombination mit einem hydropneumatischen Federzylinder eingesetzt wird. Dabei weist die Dämpfereinheit einen Teleskop-Federzylinder auf, der aus einem in einem Zylinder relativbeweglich geführten Kolben besteht, der zur Erzeugung einer lasttragenden Tragfederkraft gegen ein elastisch kompressibles Federmedium wirkt. Hierbei kann durch die erfindungsgemäße Kühlwirkung der Federzylinder höher beansprucht werden, da dieser insgesamt weniger erwärmt wird. Durch die höhere zulässige Beanspruchung des Federungssystems kann vor allem auch bei Geländefahrzeugen die Fahrleistung deutlich gesteigert werden.

Anhand von in der Zeichnung veranschaulichten, bevorzugten Ausführungsbeispielen soll die Erfindung genauer erläutert werden. Dabei zeigen:
- Fig. 1: eine Federungseinrichtung für ein Fahrzeug mit einem Teleskop- Federzylinder und mit einer nicht erfindungsgemäßen Dämpfungseinrichtung, wobei alle Komponenten im Längsschnitt dargestellt sind, und
- Fig. 2: eine Darstellung wie in Fig. 1 in einer erfindungsgemäßen Auführung.

In den beiden Figuren der Zeichnung sind gleiche Teile stets mit den gleichen Bezugszeichen versehen.

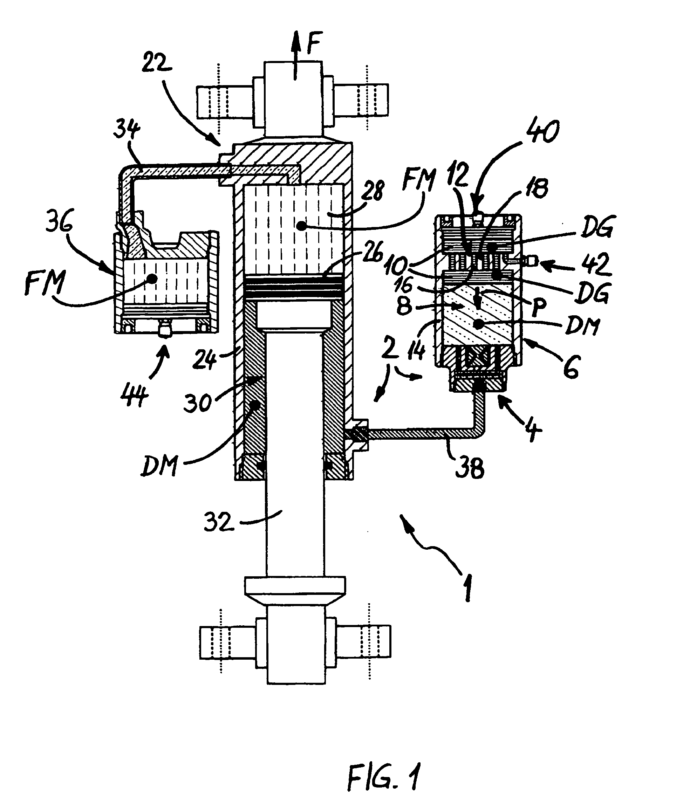

Wie sich zunächst aus Fig. 1 ergibt, besteht eine Dämpfungseinrichtung 1 aus mindestens einer Dämpfereinheit 2 zum Dämpfen von Rad-Federungsbewegungen innerhalb eines Fahrzeuges. In der Regel ist in einem Radfahrzeug jedes Rad mit einer eigenen Dämpfereinheit 2 ausgestattet, so dass ein Vierrad-Fahrzeug auch vier Dämpfereinheiten 2 aufweist. Die Dämpfereinheit 2 weist ein hydraulisches Dämpfungsventil 4 zum Drosseln von - jeweils durch Federungsbewegungen verursachten - Strömungen eines hydraulischen Dämpfungsmediums DM auf. Dem Dämpfungsventil 4 ist ein Hydraulikspeicher 6 nachgeordnet, d. h. hydraulisch nachgeschaltet.

Dieser Hydraulikspeicher 6 weist einen Speicherraum 8 für bei Dämpfung der Federungsbewegungen variierende Volumen-Anteile des Dämpfungsmediums DM auf. Das in dem Speicherraum 8 befindliche Dämpfungsmedium DM ist mit einem Vorspanndruck p beaufschlagt. Dazu weist der Hydraulikspeicher 6 benachbart zu dem Speicherraum 8 einen Druckraum 10 auf, der ein das Dämpfungsmedium DM mit dem Vorspanndruck p beaufschlagendes Druckgas DG enthält. Der Vorspanndruck p des Druckgases DG kann in der Größenordnung von 2 bis 20 bar, insbesondere im Bereich von 3 bis 10 bar liegen. Dieser Vorspanndruck p unterstützt die jeweilige Rückströmung des Dämpfungsmediums DM aus dem Speicherraum 8 zurück über das jeweilige Dämpfungsventil 4.

Weiterhin weist der Hydraulikspeicher 6 ein Kühlelement 12 zum Abführen von Wärme des Dämpfungsmediums DM nach außen an die Umgebung auf. In bevorzugter Ausgestaltung ist das Kühlelement 12 von einer innerhalb eines insbesondere zylindrischen Gehäuses 14 des Hydraulikspeichers 6 angeordneten und mehrere durchgehende Strömungsöffnungen 16 aufweisenden Zwischenwandung 18 gebildet. Diese Zwischenwandung 18 und auch das Gehäuse 14 bestehen jeweils aus einem Material mit guter Wärmeleitfähigkeit, insbesondere Metall, und sind miteinander wärmeleitend verbunden. Hierdurch wird Wärme, die durch Drosselung (innere Molekularreibung) des Dämpfungsmediums DM entsteht, aus dem Innenraum des Hydraulikspeichers 6 über das Kühlelement 12 bzw. die Zwischenwandung 18 zum Gehäuse 14 abgeleitet und dann über die äußere Oberfläche des Gehäuses 14 nach außen an die Umgebung abgestrahlt.

Bei der ersten Ausführungsform gemäß Fig. 1 wird das Dämpfungsmedium DM unmittelbar von dem Druckgas DG beaufschlagt. Hierbei ist der Hydraulikspeicher 6 so im Raum zu orientieren, dass der Speicherraum 8 vertikal unten und der Druckraum 10 oben angeordnet sind. Bei dieser Ausführung kann die Zwischenwandung 18 beliebig im Bereich des Speicherraums 8 und/oder im Bereich des Druckraums 10 angeordnet sein (je nach Füllgrad des Speicherraums 8). Die Strömungsöffnungen 16 der Zwischenwandung 18 werden somit bei den federungsbedingten Strömungen des Dämpfungsmediums DM jeweils von dem Dämpfungsmedium DM und/oder dem Druckgas DG durchströmt. Bei der in Fig. 1 dargestellten Ausführung ist die Zwischenwandung 18 - unabhängig vom Füllgrad des Speicherraums 8 - stets innerhalb des Druckraums 10 angeordnet, so dass die Strömungsöffnungen 16 nur vom Druckgas DG durchströmt werden. Hierbei wird die Wärme aus dem Dämpfungsmedium DM über das Druckgas DG in die Zwischenwandung 18 übertragen und von dort nach außen an das Gehäuse 14 abgeleitet.

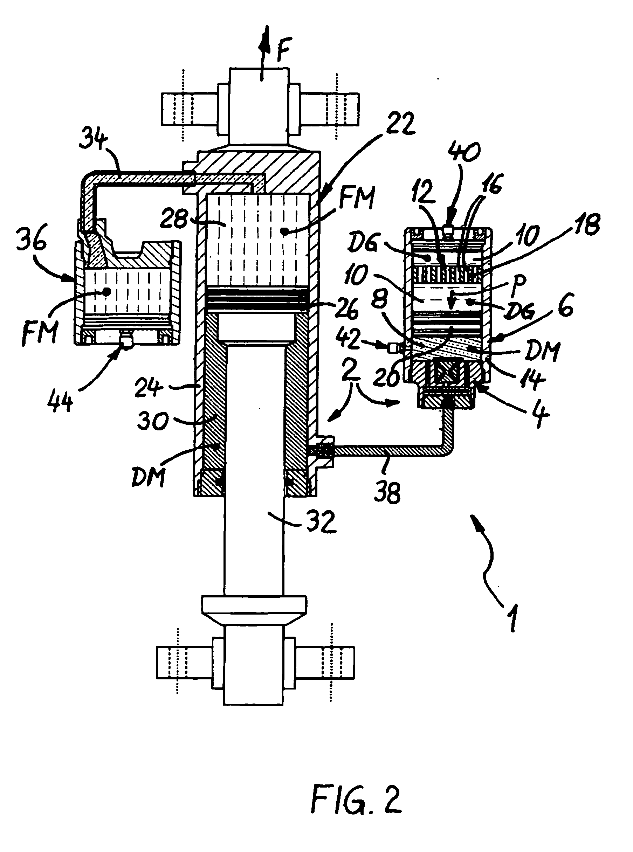

In der erfindungsgemäßen Ausführung nach Fig. 2 ist der Speicherraum 8 von dem Druckraum 10 über ein Trennelement mediendicht getrennt. Wie dargestellt ist als Trennelement innerhalb des zylindrischen Hydraulikspeichers 6 ein frei beweglich (schwimmend) geführter Trennkolben 20 angeordnet. Durch das Trennelement kann der Hydraulikspeicher 6 vorteilhafterweise in beliebiger Raumorientierung angeordnet werden, beispielsweise auch - abweichend von der Darstellung in Fig. 2 - so, dass der Speicherraum 8 "oben" und der Druckraum 10 "unten" angeordnet sind. Bei dieser Ausführung gemäß Fig. 2 ist die Zwischenwandung 1B ebenfalls bevorzugt innerhalb des Druckraums 10 angeordnet, und zwar an einer derartigen Stelle, dass bei allen in der Praxis auftretenden, federungsbedingten Strömungen des Dämpfungsmediums DM die Beweglichkeit des Trennkolbens 20 gewährleistet bleibt. Bei dieser Ausführung wird die im Dämpfungsmedium DM entstehende Wärme über den Trennkolben 20 in das Druckgas DG übertragen und dann über das Kühlelement 12 abgeführt. Alternativ zu dieser Ausführung gemäß Fig. 2 ist es grundsätzlich auch möglich, die Zwischenwandung 18 innerhalb des Speicherraums 8 anzuordnen.

An dieser Stelle sei bemerkt, dass der Hydraulikspeicher 6 ausschließlich als Reservoir für das zur Dämpfung hin und her strömende Dämpfungsmedium DM fungiert. Dies bedeutet, dass der Hydraulikspeicher 6 ausschließlich dem Dämpfungskreislauf zugeordnet ist und folglich keine Federwirkung zur Rad-Abstützung im Fahrzeug hat.

In weiterer vorteilhafter Ausgestaltung ist allerdings die Dämpfungseinrichtung 1 praktisch mit einem Federungssystem kombiniert. Dazu ist die Dämpfereinheit 2 bevorzugt anteilig Bestandteil eines Teleskop-Federzylinders 22, der insbesondere zur Anordnung als so genanntes Federbein zwischen einem Fahrzeugrad bzw. einer Radaufhängung und einem Fahrzeugrahmen (nicht dargestellt) vorgesehen ist. Der Federzylinder 22 besteht aus einem Zylinder 24 und einem darin linear relativbeweglich geführten Kolben 26, der zur Erzeugung einer lasttragenden Tragfederkraft F gegen den Druck eines elastisch kompressiblen Federmediums FM wirkt. Der Kolben 26 trennt innerhalb des Zylinders 24 zwei Arbeitsräume 28 und 30 mediendicht voneinander; der erste Arbeitsraum 28 ist dem Federmedium FM zugeordnet, während der zweite Arbeitsraum 30 dem hydraulischen Dämpfungsmedium DM zugeordnet ist. Dadurch sind zwei voneinander unabhängige Kreisläufe einerseits des Federmediums FM für die Federung und andererseits des Dämpfungsmediums DM für die Dämpfung gebildet. Dadurch wird eine weitgehende thermische Unabhängigkeit zwischen den Medien DM und FM erreicht. Der Kolben 26 ist auf einer Kolbenseite mit einer Kolbenstange 32 verbunden, die umfangsgemäß abgedichtet aus dem Zylinder 24 nach außen geführt ist. Dadurch ist einer der zwei Arbeitsräume als ein die Kolbenstange 32 umschließender Ringraum ausgebildet.

In den dargestellten, bevorzugten Ausführungen bildet der die Kolbenstange 32 umschließende Ringraum den dem Dämpfungsmedium DM zugeordneten zweiten Arbeitsraum 30, während ein gegenüberliegender Zylinderraum den dem Federmedium FM zugeordneten ersten Arbeitsraum 28 bildet.

Der erste Arbeitsraum 28 ist mit dem elastisch kompressiblen Federmedium FM gefüllt und insbesondere über eine Leitung 34 mit einem zusätzlichen, ebenfalls mit Federmedium FM gefüllten Federspeicher 36 verbunden. Das Federmedium FM steht unter einem entsprechend hoch ausgelegten Druck, um durch Beaufschlagung des Kolbens 26 die Tragfederkraft F zu erzeugen.

Alternativ zu dieser Ausführung ist es auch möglich, den ersten Arbeitsraum 28 mit einem Hydraulikmedium zu füllen und hydraulisch mit dem Federspeicher 36 zu verbinden, wobei der Federspeicher 36 dann als hydropneumatischer Speicher z. B. mit einem Trennkolben zwischen dem Hydraulikmedium und dem Federmedium auszubilden ist.

Der zweite Arbeitsraum 30 ist mit dem hydraulischen Dämpfungsmedium DM gefüllt und mit dem Dämpfungsventil 4 verbunden. Das Dämpfungsventil 4 kann grundsätzlich außen an oder innen in dem Federzylinder 22 angeordnet sein (nicht dargestellt). In den dargestellten, vorteilhaften Ausgestaltungen ist aber das Dämpfungsventil 4 als separates Bauteil mit dem eigenen, von dem Federzylinder 22 entfernt anzuordnenden Gehäuse 14 ausgebildet und mit dem Federzylinder 22 über eine Hydraulikleitung 38 verbunden.

Das Dämpfungsventil 4 besteht aus zwei Teilventilen, und zwar einem ersten Teilventil mit einem relativ höheren Drosselwiderstand für die Strömung des Dämpfungsmediums DM in den Hydraulikspeicher 6 und einem zweiten Teilventil mit einem relativ geringeren Drosselwiderstand für die umgekehrte Strömung aus dem Hydraulikspeicher 6 zurück in den Federzylinder 22. Hierdurch wird in an sich bekannter Weise erreicht, dass die Einfederung des Federzylinders 22 gering gedämpft wird, während die Ausfederung stärker gedämpft wird.

Als Druckgas DG für den Hydraulikspeicher 6 und/oder als Federmedium FM für den Federzylinder 22 und/oder optional für den zusätzlichen Federspeicher 36 wird insbesondere Stickstoff eingesetzt.

Durch die bevorzugt externe, von dem Federzylinder 22 getrennte Anordnung des Dämpfungsventils 4 und insbesondere durch das erfindungsgemäße Kühlelement 12 wird eine sehr effektive Kühlung des sich bei Drosselung erwärmenden Dämpfungsmediums DM erreicht. Dadurch wird eine Wärmeübertragung innerhalb des Federzylinders 22 auf das Federmedium FM außerordentlich gering gehalten, so dass das mit der erfindungsgemäßen Dämpfungseinrichtung ausgerüstete Federungssystem sehr konstante Federungs- und Dämpfungseigenschaften gewährleistet.

In einer weiteren vorteilhaften Ausgestaltung der Erfindung weist der Hydraulikspeicher 6 ein Überdruckventil 40 auf, welches insbesondere so ausgelegt ist, dass es ab einem bestimmten Überdruck öffnet, der dem jeweiligen Maximalwert des Vorspanndruckes p entspricht. So öffnet das Überdruckventil 40 ab etwa 20 bar, vorzugsweise ab etwa 10 bar. Durch das Überdruckventil 40 wird vorteilhafterweise verhindert, dass im Falle einer Undichtigkeit im Bereich der Dichtungen des Kolbens 26 der höhere Druck des Federmediums FM einen unzulässigen Überdruck im Hydraulikspeicher 6 bewirken könnte.

Der Hydraulikspeicher 6 kann weiterhin an einer geeigneten Stelle des Gehäuses 14 ein Füllventil 42 aufweisen. Weiterhin ist auch der Federspeicher 36 mit einem Füllventil 44 ausgestattet.

## Patentansprüche

1. Dämpfungseinrichtung (1) für Fahrzeuge, mit einer Dämpfereinheit (2) zum Dämpfen von Rad-Federungsbewegungen, wobei die Dämpfereinheit (2) ein hydraulisches Dämpfungsventil (4) zum Drosseln von federungsbedingten Strömungen eines hydraulischen Dämpfungsmediums (DM) aufweist, wobei dem Dämpfungsventil (4) ein Hydraulikspeicher (6) nachgeordnet ist, der einen Speicherraum (8) für bei Dämpfung der Federungsbewegungen variierende Volumen-Anteile des Dämpfungsmediums (DM) sowie benachbart zu dem Speicherraum (8) einen Druckraum (10) mit einem das Dämpfungsmedium (DM) mit einem Vorspanndruck (p) beaufschlagenden Druckgas (DG) aufweist, wobei der Hydraulikspeicher (6) ein Kühlelement (12) zum Abführen von Wärme des Dämpfungsmediums (DM) nach außen an die Umgebung aufweist, wobei das Kühlelement (12) von einer innerhalb eines Gehäuses (14) des Hydraulikspeichers (6) angeordneten und Strömungsöffnungen (16) aufweisenden Zwischenwandung (18) gebildet ist, wobei die Zwischenwandung (18) und das Gehäuse (14) jeweils aus einem Material mit guter Wärmeleitfähigkeit bestehen und miteinander wärmeleitend verbunden sind, **dadurch gekennzeichnet, dass** der Speicherraum (8) von dem Druckraum (10) über einen frei beweglich geführten Trennkolben (20) mediendicht getrennt ist, wobei die das Kühlelement (12) bildende Zwischenwandung (18) innerhalb des Druckraums (10) oder innerhalb des Speicherraums (8) angeordnet ist.

2. Dämpfungseinrichtung nach Anspruch 1,
**dadurch gekennzeichnet, dass** der Vorspanndruck (p) im Bereich von 2 bis 20 bar, insbesondere im Bereich von 3 bis 10 bar, liegt.

3. Dämpfungseinrichtung nach Anspruch 1 oder 2,
**dadurch gekennzeichnet, dass** der Hydraulikspeicher (6) ein Überdruckventil (40) aufweist, welches insbesondere so ausgelegt ist, dass es bei einem Überdruck von ab etwa 20 bar, vorzugsweise ab etwa 10 bar, öffnet.

4. Dämpfungseinrichtung nach einem der Ansprüche 1 bis 3,
**dadurch gekennzeichnet, dass** dieDämpfereinheit(2)einen Teleskop-Federzylinder (22) - insbesondere zur Anordnung als Federbein zwischen einem Fahrzeugrad und einem Fahrzeugrahmen - aufweist, wobei der Federzylinder (22) einen in einem Zylinder (24) relativbeweglich geführten Kolben (26) aufweist, der zur Erzeugung einer lasttragenden Tragfederkraft (F) unmittelbar oder mittelbar über ein Hydraulikmedium gegen ein elastisch kompressibles Federmedium (FM) wirkt.

5. Dämpfungseinrichtung nach Anspruch 4,
**dadurch gekennzeichnet, dass** der Kolben (26) innerhalb des Zylinders (24) zwei Arbeitsräume (28, 30) mediendicht voneinander trennt, wobei der erste Arbeitsraum (28) dem Federmedium (FM) und der zweite Arbeitsraum (30) dem hydraulischen Dämpfungsmedium (DM) zugeordnet sind.

6. Dämpfungseinrichtung nach Anspruch 5,
**dadurch gekennzeichnet, dass** der Kolben (26) einseitig eine umfangsgemäß abgedichtet aus dem Zylinder (24) nach außen geführte Kolbenstange (32) aufweiset, so dass einer der zwei Arbeitsräume (28, 30) als ein die Kolbenstange (32) umschließender Ringraum ausgebildet ist, wobei der Ringraum den dem Dämpfungsmedium (DM) zugeordneten zweiten Arbeitsraum (30) bildet, während ein gegenüberliegender Zylinderraum den dem Federmedium (FM) zugeordneten ersten Arbeitsraum (28) bildet

7. Dämpfungseinrichtung nach Anspruch 5 oder 6,
**dadurch gekennzeichnet, dass** der erste Arbeitsraum (28) mit dem elastisch kompressiblen Federmedium (FM) gefüllt und insbesondere über eine Leitung (34) mit einem zusätzlichen, ebenfalls mit Federmedium (FM) gefüllten Federspeicher (36) verbunden ist, und dass der zweite Arbeitsraum (30) mit dem hydraulischen Dämpfungsmedium (DM) gefüllt und mit dem zugehörigen Dämpfungsventil (4) insbesondere über eine Hydraulikleitung (38) verbunden ist.

8. Dämpfungseinrichtung nach einem der Ansprüche 1 bis 7,
**dadurch gekennzeichnet, dass** dasDämpfungsventil(4)aus zwei Teilventilen besteht, und zwar einem ersten Teilventil mit einem höheren Drosselwiderstand für die Strömung des Dämpfungsmediums (DM) in den Hydraulikspeicher (6) hinein und einem zweiten Teilventil mit einem geringeren Drosselwiderstand für die umgekehrte Strömung aus dem Hydraulikspeicher (6) heraus.

9. Dämpfungseinrichtung nach einem der Ansprüche 1 bis 8,
**dadurch gekennzeichnet, dass** das Druckgas (DG) innerhalb des Hydraulikspeichers (6) Stickstoff ist.

10. Dämpfungseinrichtung nach einem der Ansprüche 4 bis 9,
**dadurch gekennzeichnet, dass** das Federmedium (FM) ein Druckgas, wie insbesondere Stickstoff ist.

## Claims

1. A damping means (1) for vehicles, with a damper unit (2) for damping wheel/suspension movements, the damper unit (2) having a hydraulic damping valve (4) for constricting flows, due to the suspension, of a hydraulic damping medium (DM), the damping valve (4) being succeeded by a hydraulic accumulator (6) which has an accumulator chamber (8) for proportions by volume of the damping medium (DM) which vary during damping of the suspension movements and also, adjacent to the accumulator chamber (8), a pressure chamber (10) with a compressed gas (DG) which acts upon the damping medium (DM) with a preload pressure (p), the hydraulic accumulator (6) having a cooling element (12) for dissipating heat from the damping medium (DM) outwards to the surroundings, the cooling element (12) being formed by partitioning (18) which is arranged within a housing (14) of the hydraulic accumulator (6) and has flow openings (16), the partitioning (18) and the housing (14) consisting in each case of a material with good thermal conductivity and being connected together in thermally conductive manner,
**characterised in that** the accumulator chamber (8) is separated in media-tight manner from the pressure chamber (10) via a separating piston (20) which is guided in freely movable manner, the partitioning (18) forming the cooling element (12) being arranged within the pressure chamber (10) or within the accumulator chamber (8).

2. A damping means according to Claim 1,
**characterised in that** the preload pressure (p) lies in the range of 2 to 20 bar, in particular in the range of 3 to 10 bar.

3. A damping means according to Claim 1 or 2,
**characterised in that** the hydraulic accumulator (6) has a pressure relief valve (40) which is designed in particular such that it opens at an excess pressure of about 20 bar, preferably about 10 bar, onwards.

4. A damping means according to one of Claims 1 to 3,
**characterised in that** the damper unit (2) has a telescopic spring cylinder (22), in particular for arranging as a suspension strut between a vehicle wheel and a vehicle frame, the spring cylinder (22) having a piston (26) which is guided in relatively movable manner in a cylinder (24), which piston, for generating a load-bearing bearing spring force (F), acts directly or indirectly via a hydraulic medium against an elastically compressible spring medium (FM).

5. A damping means according to Claim 4,
**characterised in that** the piston (26) within the cylinder (24) separates two operating chambers (28, 30) from each other in media-tight manner, the first operating chamber (28) being associated with the spring medium (FM) and the second operating chamber (30) with the hydraulic damping medium (DM).

6. A damping means according to Claim 5,
**characterised in that** the piston (26) has on one side a piston rod (32) which is guided in peripherally sealed manner outwards out of the cylinder (24), so that one of the two operating chambers (28, 30) is formed as an annular chamber surrounding the piston rod (32), the annular chamber forming the second operating chamber (30) associated with the damping medium (DM), while an opposing cylinder chamber forms the first operating chamber (28) associated with the spring medium (FM).

7. A damping means according to Claim 5 or 6,
**characterised in that** the first operating chamber (28) is filled with the elastically compressible spring medium (FM) and is connected in particular via a line (34) to an additional spring-type actuator (36) likewise filled with spring medium (FM), and **in that** the second operating chamber (30) is filled with the hydraulic damping medium (DM) and is connected to the associated damping valve (4) in particular via a hydraulic line (38).

8. A damping means according to one of Claims 1 to 7,
**characterised in that** the damping valve (4) consists of two partial valves, namely a first partial valve with a higher choking resistance for the flow of the damping medium (DM) into the hydraulic accumulator (6) and a second partial valve with a lower choking resistance for the reverse flow out of the hydraulic accumulator (6).

9. A damping means according to one of Claims 1 to 8,
**characterised in that** the compressed gas (DG) within the hydraulic accumulator (6) is nitrogen.

10. A damping means according to one of Claims 4 to 9,
**characterised in that** the spring medium (FM) is a compressed gas, such as in particular nitrogen.

## Revendications

1. Dispositif d'amortissement (1) pour des véhicules, comprenant une unité amortisseur (2) pour l'amortissement de mouvements de suspension de roue, l'unité d'amortisseur (2) présentant une vanne d'amortissement (4) hydraulique pour la réduction des écoulements dus à la suspension d'un fluide d'amortissement (DM) hydraulique, un accumulateur hydraulique (6) étant disposé en aval de la vanne d'amortissement (4), lequel accumulateur présente un espace accumulateur (8) pour des fractions de volume du fluide d'amortissement (DM) qui varient en cas d'amortissement des mouvements de suspension, et à proximité de l'espace accumulateur (8) un espace de pression (10) avec un gaz comprimé (DG) sollicitant le fluide d'amortissement (DM) avec une pression de précontrainte (p), l'accumulateur hydraulique (6) présentant un élément réfrigérant (12) pour l'évacuation de la chaleur du fluide d'amortissement (DM) vers l'extérieur dans l'environnement, l'élément réfrigérant (12) étant formé par une paroi intermédiaire (18) disposée à l'intérieur d'un carter (14) de l'accumulateur hydraulique (6) et présentant des ouvertures d'écoulement (16), la paroi intermédiaire (18) et le carter (14) étant à chaque fois à base d'un matériau présentant une bonne conductibilité thermique et étant reliés l'un à l'autre de façon thermoconductrice, **caractérisé en ce que** l'espace accumulateur (8) est séparé de l'espace de pression (10) au moyen d'un piston de séparation (20), guidé de façon librement mobile, de façon étanche au fluide, la paroi intermédiaire (18) formant l'élément réfrigérant (12) étant disposée à l'intérieur de l'espace de pression (10) ou à l'intérieur de l'espace accumulateur (8).

2. Dispositif d'amortissement selon la revendication 1,
**caractérisé en ce que** la pression de précontrainte (p) se situe dans la plage de 2 à 20 bars, en particulier dans la plage de 3 à 10 bars.

3. Dispositif d'amortissement selon la revendication 1 ou 2,
**caractérisé en ce que** l'accumulateur hydraulique (6) présente une vanne de surpression (40), qui est conçue en particulier de telle sorte qu'elle s'ouvre dans le cas d'une surpression, à partir d'environ 20 bars, de préférence à partir d'environ 10 bars.

4. Dispositif d'amortissement selon l'une des revendications 1 à 3,
**caractérisé en ce que** l'unité amortisseur (2) présente un vérin à ressort télescopique (22) - en particulier pour l'agencement comme jambe de suspension entre une roue de véhicule et un cadre de véhicule, le cylindre à ressort (22) présentant un piston (26) guidé dans un cylindre (24) avec une mobilité relative, lequel piston agit, pour générer une force de ressort support (F) portant la charge, directement ou indirectement par le biais d'un fluide hydraulique contre un fluide élastique (FM) compressible de façon élastique.

5. Dispositif d'amortissement selon la revendication 4,
**caractérisé en ce que** le piston (26) sépare à l'intérieur du cylindre (24) deux espaces de travail (28, 30) de façon étanche au fluide, le premier espace de travail (28) étant attribué au fluide élastique (FM) et le second espace de travail (30) au fluide d'amortissement (DM) hydraulique.

6. Dispositif d'amortissement selon la revendication 5,
**caractérisé en ce que** le piston (26) présente sur un coté une tige de piston (32) guidée vers l'extérieur à la sortie du cylindre (24), étanchéifiée sur le pourtour, de sorte que l'un des deux espaces de travail (28, 30) est conçu sous la forme d'un espace annulaire entourant la tige de piston (32), l'espace annulaire formant le second espace de travail (30) attribué au fluide d'amortissement (DM), alors qu'un espace de cylindre opposé forme le premier espace de travail (28) attribué au fluide élastique (FM).

7. Dispositif d'amortissement selon la revendication 5 ou 6,
**caractérisé en ce que** le premier espace de travail (28) est rempli avec le fluide élastique (FM) compressible de façon élastique et relié en particulier par une conduite (34) à un accumulateur élastique (36) supplémentaire rempli également avec du fluide élastique (FM), et **en ce que** le second espace de travail (30) est rempli avec le fluide d'amortissement (DM) hydraulique et est relié à la vanne d'amortissement (4) spécifique en particulier par une conduite hydraulique (38).

8. Dispositif d'amortissement selon l'une des revendications 1 à 7,
**caractérisé en ce que** la vanne d'amortissement (4) présente deux parties de vannes, à savoir une première partie de vanne avec une résistance à l'étranglement assez élévée pour l'écoulement du fluide d'amortissement (DM) à l'intérieur de l'accumulateur hydraulique (6) et une seconde partie de vanne avec une résistance à l'étranglement assez faible pour l'écoulement inversé à la sortie de l'accumulateur hydraulique (6).

9. Dispositif d'amortissement selon l'une des revendications 1 à 8,
**caractérisé en ce que** le gaz comprimé (DG) à l'intérieur de l'accumulateur hydraulique (6) est de l'azote.

10. Dispositif d'amortissement selon l'une des revendications 4 à 9,
**caractérisé en ce que** le fluide élastique (FM) est un gaz comprimé, comme en particulier de l'azote.
